# FASCICULE DE BREVET EUROPEEN

(11) **EP 3 283 312 B1**
(45) Date de publication et mention de la délivrance du brevet: **17.07.2019**
(21) Numéro de dépôt: 16719451.3
(22) Date de dépôt: 01.04.2016
(51) Int. Cl.: B60J 5/04

(54) **STRUCTURE DE PORTE AVEC UN ÉLÉMENT DE FERMETURE LOCALE DE LA SECTION DU PROFILÉ DE RENFORT DE BANDEAU**
TÜRKONSTRUKTION MIT EINEM ELEMENT ZUM LOKALEN VERSCHLUSS DES QUERSCHNITTS DES PLATTENVERSTEIFUNGSPROFILELEMENTS
DOOR STRUCTURE COMPRISING AN ELEMENT FOR LOCALLY CLOSING THE CROSS-SECTION OF THE PANEL REINFORCEMENT PROFILE MEMBER

(30) Priorité: 16.04.2015 FR 1553412
(43) Date de publication de la demande: 21.02.2018
(73) Titulaire: Renault S.A.S., 92100 Boulogne-Billancourt (FR)
(72) Inventeur: GARNIER, Laura, 78180 Montigny Le Bretonneux (FR); CHAILLOU, Benoit, 78960 Voisin Le Bretonneux (FR); QUEVILLARD, Thomas, 91310 Linas (FR)
(86) Numéro de dépôt international: PCT/FR2016/050756
(87) Numéro de publication internationale: WO 2016/166438

(56) Documents cités:
- FR-A1- 2 917 336
- FR-A1- 2 917 336
- FR-A1- 3 004 147
- FR-A1- 3 004 147

## Description

### Domaine technique de l'invention

L'invention concerne le domaine du véhicule automobile.

L'invention a pour objet plus particulièrement une structure de porte de véhicule automobile, comportant un caisson structurel de porte et un profilé de renfort de bandeau rapporté sur le caisson structurel de porte et configuré de sorte à assurer au moins une reprise d'efforts de compression dans sa longueur en cas de choc frontal, ou arrière, appliqué à un véhicule équipé de ladite structure, une section du profilé de renfort de bandeau considérée dans un plan de coupe transversal à ladite longueur présentant un contour ouvert.

### État de la technique

Lors d'un choc sur un véhicule, que ce soit un choc frontal venant de l'avant ou d'un choc arrière venant de l'arrière, la structure du véhicule est normalement configurée pour se déformer de manière contrôlée selon l'axe longitudinal du véhicule. Ce contrôle peut être effectué en disposant des renforts de structure à des emplacements prédéterminés.

On s'intéresse ici plus particulièrement aux portes d'un véhicule.

Une porte de véhicule automobile comporte généralement une structure de porte habillée d'une paroi extérieure participant à la carrosserie et d'une paroi intérieure de type garnissage du côté habitacle. La structure de porte participe à la constitution de la caisse structurelle du véhicule, en ce sens qu'elle est destinée à conférer, en fonctionnement ou en en cas de choc, la rigidité nécessaire pour encaisser les efforts de la manière contrôlée présentée ci-dessus.

Pour apporter une rigidité suffisante à la structure de porte, il est connu de prévoir l'ajout, sur le caisson structurel, d'un profilé de renfort de bandeau destiné à assurer au moins une reprise d'efforts de compression dans sa longueur en cas de choc frontal ou arrière appliqué au véhicule équipé de la structure de porte.

Classiquement, les renforts de bandeaux de porte étaient constitués par des profilés ayant des sections fermées, comme cela est par exemple décrit dans le document FR-A1-2851981. Le document FR-2917336 décrit une structure de porte de véhicule automobile selon le préambule de la revendication 1.

Il est également connu de prévoir l'organisation des dispositifs spéciaux permettant de fiabiliser l'accouplement entre l'extrémité avant de chaque renfort de bandeau de porte et le pied avant de la caisse structurelle. Notamment, une rotation du pied avant pendant le choc de quelques degré est admise, typiquement de l'ordre de 6° suivant l'axe vertical. En cas de dépassement de la valeur tolérée pour laquelle le pied avant a été conçu, un pion anti-éclatement, également connu sous la terminologie pion « anti burst » dans le domaine concerné, fixé sur le pied avant entre en contact avec la partie intérieure du bandeau de porte. Le bandeau de porte reste ainsi en contact avec le pied avant pendant toute la durée du choc, ce qui évite que la porte n'échappe à la caisse et permet à l'énergie du choc d'être absorbée et transmise par la porte.

Dans le cadre de la réduction de la consommation en énergie et des coûts, des efforts sont mis en place pour alléger et simplifier certaines pièces et les renforts de bandeaux en font partie. C'est l'une des raisons de la tendance actuelle à concevoir des profilés de renfort de bandeau ayant non plus une section de forme fermée comme cela était le cas avant, mais au contraire présentant avantageusement une section de coupe de forme ouverte.

Mais cela représente une difficulté dans la gestion de la mise en oeuvre de la fonction du pion anti-éclatement. En effet, lorsque la rotation du pied avant dépasse la valeur critique, le pion anti-éclatement vient maintenant s'appuyer sur le caisson structurel de porte, qui présente malheureusement une épaisseur nettement inférieure à celle des renforts de bandeaux de l'art antérieur. Il en résulte de très gros risques de voir le caisson structurel de porte se déchirer sous l'action du pion anti-éclatement. Il va de soi que ce risque de voir la porte échapper au pied avant de la caisse n'est pas satisfaisant en terme de sécurité et en particulier constitue une non-conformité vis-à-vis des critères de structure de l'organisme EuroNCAP.

### Objet de l'invention

Le but de la présente invention est de proposer une structure de porte qui remédie aux inconvénients listés ci-dessus.

Notamment, un objet de l'invention est de fournir une telle structure de porte qui soit légère, simple, rigide, économique, et améliorant dans le même temps la sécurité conférée par la structure de porte dans la fonction anti-éclatement en cas de choc.

On tend vers ce but en ce que la structure de porte comprend un élément de fermeture agencé au niveau de la zone d'interface de la structure de porte avec la caisse du véhicule, d'une manière telle que d'une part l'élément de fermeture soit interposé entre le caisson structurel de porte et le profilé de renfort de bandeau suivant le sens de l'épaisseur de la structure et d'autre part l'ensemble formé par l'élément de fermeture et par le profilé de renfort de bandeau présente localement une section considérée dans un plan de coupe transversal à ladite longueur présentant un contour fermé sur une partie uniquement de ladite longueur située au niveau de ladite zone d'interface.

Notamment, l'élément de fermeture peut être constitué par une pièce indépendante du profilé de renfort de bandeau et fixée sur le profilé de rapport de bandeau entre celui-ci et le caisson structurel de porte.

Par exemple, l'élément de renfort se présente sous la forme d'une patte s'étendant suivant une direction verticale suivant laquelle se définit la hauteur de la structure de porte.

Selon une réalisation, l'élément de fermeture et le profilé de renfort de bandeau délimitent entre eux, suivant l'épaisseur de la structure, un intervalle dans lequel un pion anti-éclatement solidaire d'un pied avant de la caisse du véhicule est apte à se positionner suivant une direction d'orientation de ladite longueur, ledit pion anti-éclatement étant configuré pour maintenir l'accouplement entre le pied avant et le profilé de renfort de bandeau en cas de rotation du pied avant sous l'effet d'un choc frontal, ou arrière, appliqué à un véhicule équipé de ladite structure, au-delà d'une valeur angulaire prédéterminée.

En particulier, la direction d'orientation de la longueur du profilé de renfort de bandeau peut être destinée à être orientée selon une direction longitudinale du véhicule lorsque la porte occupe une position fermée par rapport à la caisse.

Notamment, le caisson structurel de porte délimite une ouverture, formée dans une face avant du caisson structurel de porte, apte à être traversée par le pion anti-éclatement dans la position fermée de la porte par rapport à la caisse.

L'invention est aussi relative à une porte de véhicule automobile, comprenant une structure de porte telle que décrite et un panneau extérieur configuré pour être visible depuis l'extérieur d'un véhicule équipé de la porte, le profilé de renfort de bandeau étant situé entre le caisson structurel de porte et le panneau extérieur.

L'invention est aussi relative à un agencement pour véhicule automobile, comprenant d'une part une structure de porte telle que décrite ou une porte telle que décrite, d'autre part un pied avant faisant partie intégrante de la caisse du véhicule automobile et portant un pion anti-éclatement venant se positionner dans un intervalle délimité par l'élément de fermeture et par le profilé de renfort de bandeau entre eux suivant l'épaisseur de la structure, suivant la direction d'orientation de la longueur du profilé de renfort de bandeau, ledit pion anti-éclatement étant configuré pour maintenir l'accouplement entre le pied avant et le profilé de renfort de bandeau en cas de rotation du pied avant sous l'effet d'un choc frontal, ou arrière, appliqué à un véhicule équipé de l'agencement, au-delà d'une valeur angulaire prédéterminée.

En outre, le pied avant, le pion anti-éclatement, le profilé de renfort de bandeau et l'élément de fermeture peuvent être configurés de sorte que la valeur angulaire prédéterminée est comprise entre +/-7°.

L'invention est aussi relative à un véhicule automobile, comprenant au moins une porte telle que décrite ou au moins un agencement tel que décrit.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un éclaté incluant la structure de porte selon l'invention et une partie de caisse d'un véhicule automobile,
- la figure 2 est une vue de côté de la structure de porte montée sur la caisse du véhicule,
- et la figure 3 est une vue en coupe transversale de la structure de porte au niveau du plan de coupe A-A visible sur la figure 2.

### Description de modes préférentiels de l'invention

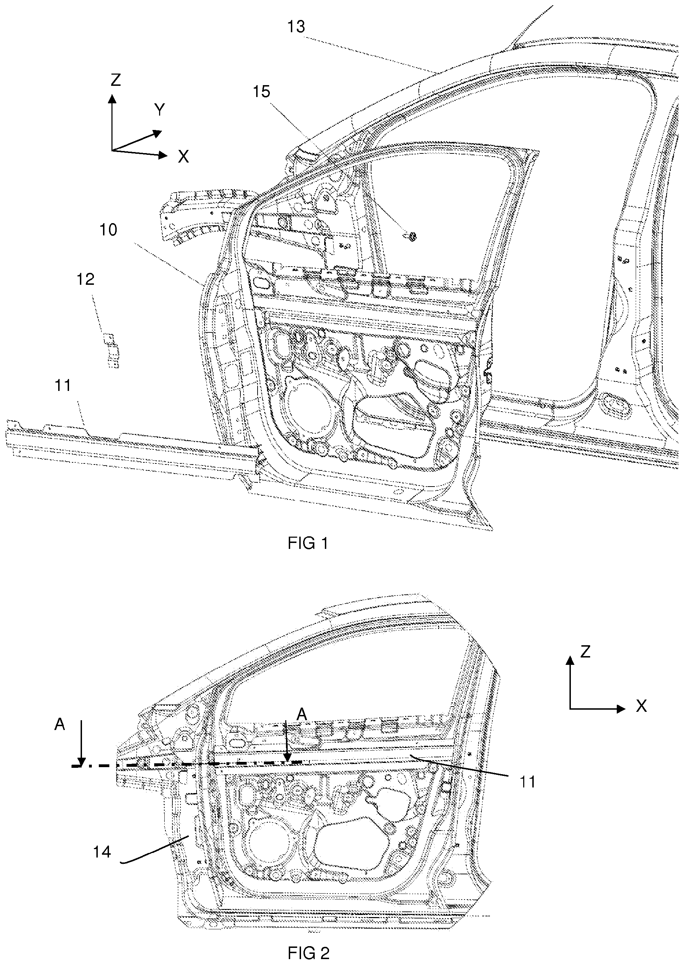

L'invention qui va maintenant être décrite, en référence aux figures 1 à 3, concerne globalement une structure de porte de véhicule automobile. Cette structure de porte comporte un caisson structurel de porte 10 et un profilé de renfort de bandeau 11 rapporté sur le caisson structurel de porte 10. Le profilé de renfort de bandeau 11 est configuré de sorte à assurer au moins une reprise d'efforts de compression dans sa longueur en cas de choc frontal, ou arrière, appliqué à un véhicule automobile équipé de cette structure de porte.

Pour une meilleure compréhension, il est associé à la structure de porte un repère orthogonal, comprenant :
- la direction X correspondant à la largeur de la porte, ce qui correspond à la direction longitudinale avant-arrière du véhicule lorsque la porte est fermée,
- la direction Y correspondant à l'épaisseur de la porte, ce qui correspond à la direction latérale droite-gauche du véhicule lorsque la porte est fermée,
- et la direction Z correspondant à la hauteur de la porte, ce qui correspond à la direction verticale du véhicule lorsque la porte est fermée.

Selon une caractéristique importante, une section de coupe du profilé de renfort de bandeau 11 considérée dans un plan de coupe transversal à sa longueur présente un contour ouvert.

Par « bandeau », on entend ici une zone de la partie inférieure de la porte située à l'interface avec l'ouverture destinée à recevoir la vitre de la porte, et globalement orientée suivant la direction X correspondant à la largeur de la porte.

Le profilé 11 et le caisson structurel 10 sont deux éléments distincts assemblés l'un avec l'autre par tout moyen mécanique, par exemple par soudage. Le profilé 11 et le caisson structurel 10 sont conformés et fixés l'un sur l'autre de sorte à délimiter entre eux, à mi hauteur de la porte, corps creux structurel de forme tubulaire allongé suivant la direction X ayant une fonction de renfort en cas de choc, en ce sens que ce dernier est configuré de sorte à encaisser un choc et à participer à une déformation pré-calculée en vue de protéger les passagers du véhicule automobile. Il ne s'agit donc pas d'un simple habillage de porte mais d'une pièce dont la fonction principale est une fonction de renfort.

La structure de porte comprend un élément de fermeture 12 agencé au niveau de la zone d'interface de la structure de porte avec la caisse 13 du véhicule, d'une manière telle que d'une part l'élément de fermeture 12 soit interposé entre le caisson structurel de porte 10 et le profilé de renfort de bandeau 11 suivant le sens de l'épaisseur de la structure (ce qui correspond à la direction Y lorsque la porte est en position fermée par rapport à la caisse 13) et d'autre part l'ensemble formé par l'élément de fermeture 12 et par le profilé de renfort de bandeau 11 présente localement une section considérée dans un plan de coupe transversal à la longueur du profilé 11 présentant un contour fermé sur une partie uniquement de cette longueur située au niveau de cette zone d'interface.

Selon un mode de réalisation particulier mais non limitatif quant à la liberté de conception et de fabrication de l'élément de fermeture 12, ce dernier est constitué par une pièce indépendante du profilé de renfort de bandeau 11 et fixée sur le profilé de rapport de bandeau 11 entre celui-ci et le caisson structurel de porte 10. En particulier, l'élément de renfort 12 peut se présenter sous la forme d'une simple patte, par exemple en forme de U ou de oméga, s'étendant suivant une direction verticale suivant laquelle se définit la hauteur de la structure de porte, ce qui in fine correspond à la direction Z.

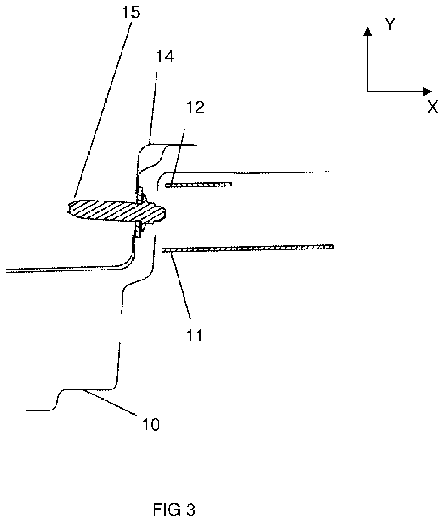

Comme le montre la figure 3, l'élément de fermeture 12 et le profilé de renfort de bandeau 11 délimitent entre eux, suivant l'épaisseur de la structure, un intervalle dans lequel un pion anti-éclatement 15 solidaire d'un pied avant 14 de la caisse 13 du véhicule est apte à se positionner suivant une direction d'orientation de la longueur du profilé 11. Le pion anti-éclatement 15 est configuré pour maintenir l'accouplement entre le pied avant 14 et le profilé de renfort de bandeau 11 en cas de rotation du pied avant 14 sous l'effet d'un choc frontal, ou arrière, appliqué à un véhicule équipé de la structure de porte, au-delà d'une valeur angulaire prédéterminée.

L'ajout de l'élément de fermeture 12 lié au profilé 11 permet qu'en cas de choc induisant une rotation du pied avant 14 au-delà de la valeur angulaire prédéterminée, le pion 15 vienne en contact avec l'élément de fermeture 12 et évite tout effet de déchirement du caisson 10 par le pion. Cela permet d'éviter que la porte ne s'échappe latéralement par rapport au pied avant 14, afin de maintenir la bonne transmission des efforts au sein de la caisse 13. La tige intérieure de ce pion 15, solidaire de la tête, permet d'assurer le montage du pion 15 sur le pied avant 14.

La direction d'orientation de la longueur du profilé de renfort de bandeau 11 est destinée à être orientée sensiblement selon la direction longitudinale X du véhicule lorsque la porte occupe une position fermée par rapport à la caisse 13. Par « orientée sensiblement », on entend ici de préférence « exactement orientée » ou « orientée à 10° près ».

Selon un mode de réalisation particulier, le caisson structurel de porte 10 délimite de préférence une ouverture, formée dans une face avant du caisson structurel de porte 10, apte à être traversée par le pion anti-éclatement 15 dans la position fermée de la porte par rapport à la caisse 13.

L'invention concerne aussi une porte de véhicule automobile, comprenant une telle structure de porte et un panneau extérieur (non représenté) configuré pour être visible depuis l'extérieur d'un véhicule équipé de la porte, le profilé de renfort de bandeau 11 étant situé entre le caisson structurel de porte 10 et ce panneau extérieur.

Les caractéristiques présentées précédemment permettent d'envisager la fourniture d'un agencement pour véhicule automobile, comprenant d'une part une telle structure de porte ou une telle porte, d'autre part un pied avant 14 faisant partie intégrante de la caisse 13 du véhicule automobile et portant un pion anti-éclatement 15 venant se positionner dans un intervalle délimité par l'élément de fermeture 12 et par le profilé de renfort de bandeau 11 entre eux suivant l'épaisseur de la structure. Le pion 15 vient se positionner dans cet intervalle suivant la direction d'orientation de la longueur du profilé de renfort de bandeau 11. Comme il l'a déjà été indiqué précédemment, le pion anti-éclatement 15 est configuré pour maintenir l'accouplement entre le pied avant 14 et le profilé de renfort de bandeau 11 en cas de rotation du pied avant 14 sous l'effet d'un choc frontal, ou arrière, appliqué à un véhicule équipé de l'agencement, au-delà d'une valeur angulaire prédéterminée.

Préférentiellement, le pied avant 14, le pion anti-éclatement 15, le profilé de renfort de bandeau 11 et l'élément de fermeture 12 sont configurés de sorte que la valeur angulaire prédéterminée soit comprise entre +/-7°, de préférence la valeur angulaire prédéterminée est comprise entre +/-3°.

L'invention concerne aussi un véhicule automobile, comprenant au moins une telle porte ou au moins un tel agencement.

La structure de porte est avantageusement légère, simple, rigide, économique, et améliore dans le même temps la sécurité conférée par la structure de porte dans la fonction anti-éclatement en cas de choc en collaboration avec le pion 15. En effet la matière est uniquement localisée au niveau du pion 15 contrairement aux bandeaux de section fermée qui existait dans l'art antérieur.

## Revendications

1. Structure de porte de véhicule automobile, comportant un caisson structurel de porte (10) et un profilé de renfort de bandeau (11) rapporté sur le caisson structurel de porte (10) et configuré de sorte à assurer au moins une reprise d'efforts de compression dans sa longueur en cas de choc frontal, ou arrière, appliqué à un véhicule équipé de ladite structure, une section du profilé de renfort de bandeau (11) considérée dans un plan de coupe transversal à ladite longueur présentant un contour ouvert, laquelle comprend un élément de fermeture (12) agencé au niveau de la zone d'interface de la structure de porte avec la caisse (13) du véhicule, d'une manière telle que d'une part l'élément de fermeture (12) soit interposé entre le caisson structurel de porte (10) et le profilé de renfort de bandeau (11) suivant le sens de l'épaisseur de la structure et d'autre part l'ensemble formé par l'élément de fermeture (12) et par le profilé de renfort de bandeau (11) présente localement une section considérée dans un plan de coupe transversal à ladite longueur présentant un contour fermé sur une partie uniquement de ladite longueur située au niveau de ladite zone d'interface, **caractérisée en ce que** l'élément de fermeture (12) et le profilé de renfort de bandeau (11) délimitent entre eux, suivant l'épaisseur de la structure, un intervalle dans lequel un pion anti-éclatement (15) solidaire d'un pied avant (14) de la caisse (13) du véhicule est apte à se positionner suivant une direction d'orientation de ladite longueur, ledit pion anti-éclatement (15) étant configuré pour maintenir l'accouplement entre le pied avant (14) et le profilé de renfort de bandeau (11) en cas de rotation du pied avant (14) sous l'effet d'un choc frontal, ou arrière, appliqué à un véhicule équipé de ladite structure, au-delà d'une valeur angulaire prédéterminée.

2. Structure de porte selon la revendication 1, **caractérisée en ce que** l'élément de fermeture (12) est constitué par une pièce indépendante du profilé de renfort de bandeau (11) et fixée sur le profilé de rapport de bandeau (11) entre celui-ci et le caisson structurel de porte (10).

3. Structure de porte selon l'une des revendications 1 ou 2, **caractérisée en ce que** l'élément de renfort (12) se présente sous la forme d'une patte s'étendant suivant une direction verticale (Z) suivant laquelle se définit la hauteur de la structure de porte.

4. Structure de porte selon l'une des revendications 1 à 3, **caractérisée en ce que** la direction d'orientation de la longueur du profilé de renfort de bandeau (11) est destinée à être orientée selon une direction longitudinale du véhicule lorsque la porte occupe une position fermée par rapport à la caisse (13).

5. Structure de porte selon l'une des revendications 1 à 4, **caractérisée en ce que** le caisson structurel de porte (10) délimite une ouverture, formée dans une face avant du caisson structurel de porte, apte à être traversée par le pion anti-éclatement (15) dans la position fermée de la porte par rapport à la caisse (13).

6. Porte de véhicule automobile, comprenant une structure de porte selon l'une quelconque des revendications 1 à 5 et un panneau extérieur configuré pour être visible depuis l'extérieur d'un véhicule équipé de la porte, le profilé de renfort de bandeau (11) étant situé entre le caisson structurel de porte (10) et le panneau extérieur.

7. Agencement pour véhicule automobile, comprenant d'une part une structure de porte selon l'une quelconque des revendications 1 à 5 ou une porte selon la revendication 7, d'autre part un pied avant (14) faisant partie intégrante de la caisse (13) du véhicule automobile et portant un pion anti-éclatement (15) venant se positionner dans un intervalle délimité par l'élément de fermeture (12) et par le profilé de renfort de bandeau (11) entre eux suivant l'épaisseur de la structure, suivant la direction d'orientation de la longueur du profilé de renfort de bandeau (11), ledit pion anti-éclatement (15) étant configuré pour maintenir l'accouplement entre le pied avant (14) et le profilé de renfort de bandeau (11) en cas de rotation du pied avant (14) sous l'effet d'un choc frontal, ou arrière, appliqué à un véhicule équipé de l'agencement, au-delà d'une valeur angulaire prédéterminée.

8. Agencement selon la revendication 7, **caractérisé en ce que** le pied avant (14), le pion anti-éclatement (15), le profilé de renfort de bandeau (11) et l'élément de fermeture (12) sont configurés de sorte que la valeur angulaire prédéterminée est comprise entre +/-7°.

9. Véhicule automobile, comprenant au moins une porte selon la revendication 6 ou au moins un agencement selon l'une quelconque des revendications 7 et 8.

## Patentansprüche

1. Kraftfahrzeugtürstruktur, umfassend einen strukturellen Türkasten (10) und eine Verstärkungsprofil-Blende (11), die an dem strukturellen Türkasten (10) angebracht ist und derart konfiguriert ist, um mindestens eine Aufnahme der Druckbeanspruchungen in ihrer Länge bei einem Frontal- oder Heckaufprall auf ein Fahrzeug, das mit dieser Struktur ausgestattet ist, zu gewährleisten, wobei ein Abschnitt der Verstärkungsprofil-Blende (11), der in einer Schnittebene betrachtet wird, die quer zu der Länge ist, eine offene Kontur aufweist, welche ein Verschlusselement (12) aufweist, das an dem Schnittstellenbereich der Türstruktur mit der Karosserie (13) des Fahrzeugs derart angeordnet ist, dass einerseits das Verschlusselement (12) zwischen dem strukturellen Türkasten (10) und der Verstärkungsprofil-Blende (11) in Richtung der Dicke der Struktur angebracht ist und andererseits die Anordnung, die durch das Verschlusselement (12) und die Verstärkungsprofil-Blende (11) gebildet ist, lokal einen Abschnitt aufweist, der in einer Schnittebene betrachtet wird, die quer zu der Länge ist, der eine geschlossene Kontur nur auf einem Teil der Länge aufweist, die sich an dem Schnittflächenbereich befindet, **dadurch gekennzeichnet, dass** das Verschlusselement (12) und die Verstärkungsprofil-Blende (11) zwischen sich in Richtung der Dicke der Struktur einen Abstand begrenzen, wobei ein Zapfen zur Berstsicherung (15), der mit einem vorderen Fuß (14) des Kastens (13) des Fahrzeugs fest verbunden ist, geeignet ist, in einer Ausrichtungsrichtung der Länge positionniert zu werden, wobei der Zapfen zur Berstsicherung (15) konfiguriert ist, um die Verbindung zwischen dem vorderen Fuß (14) und der Verstärkungsprofil-Blende (11) im Fall der Drehung des vorderen Fußes (14) unter der Einwirkung eines Frontal- oder Heckaufpralls auf ein Fahrzeug, das mit der Struktur ausgestattet ist, über einen vorbestimmten Winkelbetrag aufrechtzuhalten.

2. Türstruktur nach Anspruch 1, **dadurch gekennzeichnet, dass** das Verschlusselement (12) aus einem Teil, der unabhängig von der Verstärkungsprofil-Blende (11) ist, gebildet ist und an der Verstärkungsprofil-Blende (11) zwischen dieser und dem strukturellen Türkasten (10) befestigt ist.

3. Türstruktur nach einem der Ansprüche 1 oder 2, **dadurch gekennzeichnet, dass** das Verstärkungselement (12) die Form einer Lasche aufweist, die sich in einer vertikalen Richtung (Z) erstreckt, in der die Höhe der Türstruktur definiert wird.

4. Türstruktur nach einem der Ansprüche 1 bis 3, **dadurch gekennzeichnet, dass** die Ausrichtungsrichtung der Länge der Verstärkungsprofil-Blende (11) dazu bestimmt ist, in einer Längsrichtung des Fahrzeugs ausgerichtet zu sein, wenn die Tür eine geschlossene Position gegenüber dem Kasten (13) einnimmt.

5. Türstruktur nach einem der Ansprüche 1 bis 4, **dadurch gekennzeichnet, dass** der strukturelle Türkasten (10) eine Öffnung begrenzt, die in einer Vorderseite des strukturellen Türkastens gebildet ist, die geeignet ist, von dem Zapfen zur Berstsicherung (15) in der geschlossenen Position gegenüber dem Kasten (13) durchquert zu werden.

6. Kraftfahrzeugtür, umfassend eine Türstruktur nach einem der Ansprüche 1 bis 5 und eine Außenbeplankung, die konfiguriert ist, um von der Außenseite eines Fahrzeugs, das mit der Tür ausgestattet ist, sichtbar zu sein, wobei die Verstärkungsprofil-Blende (11) zwischen dem strukturellen Türkasten (10) und der Außenbeplankung angeordnet ist.

7. Anordnung für ein Kraftfahrzeug, umfassend einerseits eine Türstruktur nach einem der Ansprüche 1 bis 5 oder eine Tür nach Anspruch 7, andererseits einen vorderen Fuß (14), der fester Bestandteil des Kastens (13) des Kraftfahrzeugs ist und einen Zapfen zur Berstsicherung (15) trägt, der in einem Abstand, der von dem Verschlusselement (12) und von der Verstärkungsprofil-Blende (11) zwischen sich in Richtung der Dicke der Struktur begrenzt ist, in der Ausrichtungsrichtung der Länge der Verstärkungsprofil-Blende (11) positioniert wird, wobei der Zapfen zur Berstsicherung (15) konfiguriert ist, um die Verbindung zwischen dem vorderen Fuß (14) und der Verstärkungsprofil-Blende (11) im Fall der Drehung des vorderen Fußes (14) unter der Einwirkung eines Frontal- oder Heckaufpralls auf ein Fahrzeug, das mit der Anordnung ausgestattet ist, über einen vorbestimmten Winkelbetrag aufrechtzuhalten.

8. Anordnung nach Anspruch 7, **dadurch gekennzeichnet, dass** der vordere Fuß (14), der Zapfen zur Berstsicherung (15), die Verstärkungsprofil-Blende (11) und das Verschlusselement (12) derart konfiguriert sind, dass der vorbestimmte Winkelbetrag zwischen +/7° beträgt.

9. Kraftfahrzeug, umfassend mindestens eine Tür nach Anspruch 6 und mindestens eine Anordnung nach einem der Ansprüche 7 und 8.

## Claims

1. Motor vehicle door structure, comprising a structural door compartment (10) and a panel reinforcement profile member (11) mounted on the structural door compartment (10) and designed so as to ensure that compressive forces are at least absorbed along the length thereof in the event of a head-on or rear impact applied to a vehicle fitted with said structure, a cross section of the panel reinforcement profile member (11), viewed in a cutting plane transverse to said length, having an open contour, which comprises a closing element (12) arranged at the interface area between the door structure and the body (13) of the vehicle, such that the closing element (12) is interposed between the structural door compartment (10) and the panel reinforcement profile member (11) in the thickness direction of the structure, and the assembly formed by the closing element (12) and by the panel reinforcement profile member (11) has, locally, a cross section viewed in a cutting plane transverse to said length that has a closed contour over only a portion of said length located at said interface area, **characterized in that** the closing element (12) and the panel reinforcement profile member (11) together delimit, in the thickness of the structure, a gap in which an anti-burst pin (15) secured to a front hinge pillar (14) of the body (13) of the vehicle is capable of being positioned in a direction of orientation of said length, said anti-burst pin (15) being designed to keep the front hinge pillar (14) and the panel reinforcement profile member (11) coupled to each other in the event of the front hinge pillar (14) rotating beyond a predetermined angular value under the effect of a head-on or rear impact applied to a vehicle fitted with said structure.

2. Door structure according to Claim 1, **characterized in that** the closing element (12) consists of a part separate from the panel reinforcement profile member (11) and attached to the panel reinforcement profile member (11) between the latter and the structural door compartment (10) .

3. Door structure according to either of Claims 1 and 2, **characterized in that** the reinforcing element (12) is in the form of a bracket extending in a vertical direction (Z) in which the height of the door structure is defined.

4. Door structure according to one of Claims 1 to 3, **characterized in that** the direction of orientation of the length of the panel reinforcement profile member (11) is intended to be oriented in a longitudinal direction of the vehicle when the door occupies a closed position relative to the body (13).

5. Door structure according to one of Claims 1 to 4, **characterized in that** the structural door compartment (10) delimits an opening, formed in a front face of the structural door compartment, capable of being traversed by the anti-burst pin (15) in the closed position of the door relative to the body (13).

6. Motor vehicle door, comprising a door structure according to any one of Claims 1 to 5 and an outer panel designed to be visible from outside a vehicle equipped with the door, the panel reinforcement profile member (11) being located between the structural door compartment (10) and the outer panel.

7. Arrangement for a motor vehicle, comprising a door structure according to any one of Claims 1 to 5 or a door according to Claim 7, and a front hinge pillar (14) that is an integral part of the body (13) of the motor vehicle and carries an anti-burst pin (15) that is positioned in a gap delimited by the closing element (12) and by the panel reinforcement profile member (11), between them, in the thickness of the structure, in the direction of orientation of the length of the panel reinforcement profile member (11), said anti-burst pin (15) being designed to keep the front hinge pillar (14) and the panel reinforcement profile member (11) coupled to each other in the event of the front hinge pillar (14) rotating beyond a predetermined angular value under the effect of a head-on or rear impact applied to a vehicle fitted with the arrangement.

8. Arrangement according to Claim 7, **characterized in that** the front hinge pillar (14), the anti-burst pin (15), the panel reinforcement profile member (11) and the closing element (12) are designed such that the predetermined angular value is between +/-7°.

9. Motor vehicle, comprising at least one door according to Claim 6 or at least one arrangement according to any one of Claims 7 and 8.
